# EUROPEAN PATENT SPECIFICATION

(11) **EP 2 813 384 B1**
(45) Date of publication and mention of the grant of the patent: **02.05.2018**
(21) Application number: 14167138.8
(22) Date of filing: 06.05.2014
(51) Int. Cl.: B60H 1/00, B60N 3/10, F24F 13/20

(54) **Support for cooling/heating beverages in vehicles**
Träger zum Kühlen/Erwärmen von Getränken in Fahrzeugen
Support pour boissons de refroidissement/chauffage dans des véhicules

(30) Priority: 11.06.2013 ES 201330724 U
(43) Date of publication of application: 17.12.2014
(73) Proprietor: Iglesias Soto, Luis, 32516 Orense (ES)
(72) Inventor: Iglesias Soto, Luis, 32516 Orense (ES)
(74) Representative: Isern Patentes y Marcas S.L.

(56) References cited:
- EP-A1- 2 535 222
- DE-A1- 10 121 979
- JP-A- 2013 107 456
- US-A1- 2008 178 623

## Description

### OBJECT OF THE INVENTION

The present invention relates to a support for cooling and/or heating beverages in vehicles, and, more specifically, to a support which can be coupled to the area of the air outlet nozzles on vehicle dashboards, to contain and support a beverage container or vessel and thereby cooling the beverage when the air flows through the support.
Therefore, the object of the invention is to achieve a means which, in addition to securing and even stably securing a vessel or container with a beverage, also cools the beverage via the air conditioning in the vehicle, or heats it, for example, if the beverage is a baby's bottle, coffee, tea or any other beverage that is drunk hot.

### BACKGROUND OF THE INVENTION

Currently, a large number of vehicles manufactured include rings or supports that form part of the dashboard itself or adjoining parts of the vehicle interior, so the occupant or occupants of the vehicle can have the beverage to hand and it can be conveniently consumed without any problems whatsoever.
Nonetheless, it is equally true that the beverages are easily heated, and in the case of a refreshment, of course consuming such a beverage unchilled is not pleasant for the person consuming it.
It is know from the Prior Art, as disclosed by the document US2008178623, a beverage cooler for use in a land vehicle according to the preamble of claim 1. The beverage cooler includes a housing having an inlet for receiving air from a register in the land vehicle and having an outlet in fluid communication with the inlet for discharging air into the passenger compartment of the land vehicle carrying the register. A mounting bracket is connected to the housing for securing the housing to the register of a land vehicle. An insert is removably positioned within the housing. The insert includes a tubular sleeve for releasably holding a beverage container. The sleeve has a circular bottom wall and a cylindrical side wall that is affixed to, and extends upwardly from, the bottom wall. A peripheral collar extends outwardly from the top of the sleeve so as to engage the top of the housing. An absorbent pad is positioned the bottom of the tubular sleeve atop the bottom wall. A wicking strip contacts the absorbent pad and conveys, via capillary action, water away from the absorbent pad. The wicking strip is also secured within a slot in the side wall of the sleeve.

It is also know from the Prior Art, as disclosed by the document EP2535222, a device for heating or cooling beverages in vehicles, whose purpose is to serve as a means for heating or cooling the liquid contained in a small container, thereby being of great use and service in any type of vehicle that includes air conditioning and heating. In particular, the device of the invention allows a beverage (coffee, baby bottle, soft drink, water, etc.) to be consumed at a given moment at an optimum temperature by simply connecting the device to the air conditioning or heating vent of the vehicle in which it is fitted (depending on whether the drink is to be cooled or heated). The device for heating or cooling beverages is constituted by a container, with a lid on the top and a wide hole on one of its sides for the attachment thereof to the heating or air conditioning vent of the vehicle, the connection being made by clips which emerge from the rim of the hole.

It is also know from the Prior Art, as disclosed by the document JP2013107456, a cup holder by a simple and low-cost configuration capable of semi-automatically forming an accommodation space of a cup invisible from a base member at use while making an upper face of the base material neat at non-use when the cup is not accommodated. When the locking of a locking mechanism of the cup tray of the cup holder H is released by an operation button 110, the tray is positioned at a non-use position by descending by its own weight. When the cup tray returns from the use position to the non-use position by an interlocking mechanism in a state that a regulating body is located in the restriction position, the lock mechanism locks the cup tray at the non-use position.

It is also know from the Prior Art, as disclosed by the document DE10121979, the holder for a drinks can, beaker, cup or bottle in a car, camper van, aircraft or ship comprises a tubular sleeve with a sliding floor on which the can stands. This has clips at its base which bend strips mounted along the sides of the sleeve as it is raised to hold the can in place.

### DESCRIPTION OF THE INVENTION

The proposed support has been designed to solve the aforementioned problems, based on a simple yet effective solution, as in addition to being a means for supporting and stably securing the vessel or container with the beverage, the latter can also be cooled or heated.

More specifically, the support of the invention is composed of a preferably cylindrical body suitable for housing a vessel or container with a beverage on the inside, a cylindrical body having a base with an orifice and a mouth with a sealing lid in order to securely hold the vessel or container with the beverage.

Furthermore, the cylindrical body has a protruding portion laterally with a wide opening, and in line with the hinged area of the lid, which must face the air conditioning outlet nozzles of the vehicle, the protruding portion complemented with anchor lugs between the grids or elements provided by the air outlet nozzle of the vehicle, in order for the support assembly to be securely anchored and facing the air outlet of the vehicle, so that this air passes through the cylindrical body, namely inside of it, and cools/heats the beverage in the vessel or container that has been previously housed in the cylindrical body.

The protruding portion, having an adaptable flat surface, is provided with an inclined plane for adapting to the inclined surface of the vehicle dashboard, and specifically, the area of the air outlet nozzles, having provided for a number of rails in the flat adaptable part to be included in order to fit a foam rubber gasket to better fit to the air outlet nozzle of the vehicle, and may even have a number of tabs coupled to the sides so that if the air outlets are big, the air inlet inside the cylindrical body of the support can be used much more effectively.

The anchor lugs of the device act as clips, and preferably have a toothing to facilitate anchoring and connection to the grid of the air outlet nozzle of the vehicle, being able to remove toothed sections to thereby adapt it for coupling to said nozzles, depending on the model and type of vehicle in which they are used.

Provision has been made for a number of outlet orifices on the opposite side of the air inlet of the device, including a longitudinal guide, in the direction of one of the generatrices to not only lift the lid corresponding to the cylindrical body and enable access to the inside, by means of a sliding pin, but to lift the vessel or container with the contents so that it can be taken manually by the user, who can then consume it.

This pin is intended to be locked in a position of being fully removable in the coupling orifice of the lid seal provided on the inner face of the support.

Finally, it should be noted that in case of breakage or failure of the lifting element of the lid and the container or vessel, the orifice provided in the base of the cylindrical body enables the user to insert a finger or fingers through this inner orifice of the base and lift the vessel or container with the contents, in order to extract it from the cylindrical body that it is enclosed by.

It should also be noted that a number of flexible tabs have been provided radially inside the cylindrical body, which may be variable in both length and in number, and which provide a means for pressing the vessel or container to keep it in the desired position; with the special characteristic that these flexible tabs also allow air to flow around the beverage container or vessel properly, and thereby achieve maximum cooling/heating, including a number of small, inner steerable tabs for the air that can be placed in different ways.

### DESCRIPTION OF THE DRAWINGS

To complete the description being made below, and for a better understanding of the characteristics of the invention, attached to the present descriptive memory and as an integral part of it is a set of drawings where, for purposes of illustration and in a non-limiting manner, the following is shown:

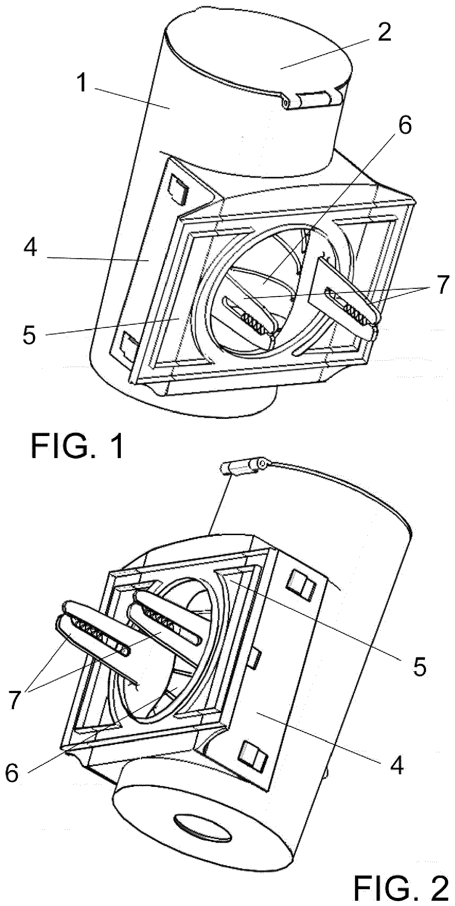

Figure 1.- Shows a perspective view of the support made in accordance with the object of the invention.
Figure 2.- Shows another perspective view, in this case in a different position to the device shown in the previous figure.

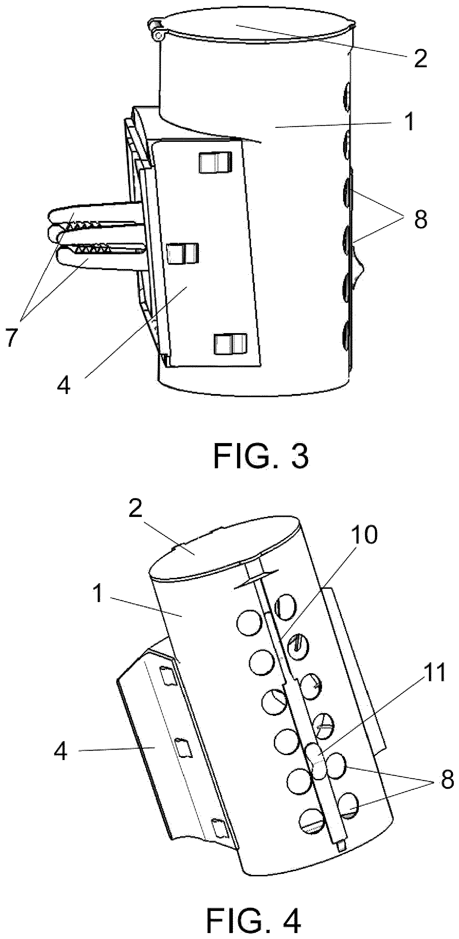

Figure 3.- Shows a perspective side view of the device shown in the preceding figures.
Figure 4.- Shows a view of the support corresponding to the opposite side of the air inlet and anchor of the actual support.
Figure 5.- Shows a perspective view of the support with the lid in an open position, revealing the flexible inner tabs on the inside for securing the beverage container or vessel.
Figure 6.- Shows a front, open perspective view of the support of the previous figure, revealing the internal features and elements thereof, and the orifice in the base.
Figure 7.- Shows a internal detailed perspective view of the orifice in which the latch of the lid seal is intended to be coupled, as well as the guide for extracting the beverage when the lid is open.
Figure 8.- Shows a detailed perspective view of the guide for extracting the beverage, specifically at the level of an appendage hook for fitting into the open position of the lid.

### PREFERRED EMBODIMENT OF THE INVENTION

As seen in the figures referred to, the support of the invention is preferably composed of a cylindrical body (1) with a sealing lid (2) in line with its upper base, while an orifice (3), the function of which will be explained below, is in line with its lower base.

In line with the lateral surface of the body (1), a protruding portion (4) has been provided with a front, flat outer surface (5), and a wide opening (6), further having a number of tabs (7) by way of toothed clips, which can be sectioned so as to be adapted, secured and connected to the air conditioning outlet nozzle of the vehicle in which it is used, so said vehicle air enters through the opening (6) to the cylindrical body (1), air that will cool/heat the beverage contained in a container or vessel housed inside the cylindrical body (1), said air exiting through orifices (8) provided in the opposite area to that of the protruding portion (5) with the anchoring means (7) discussed above.

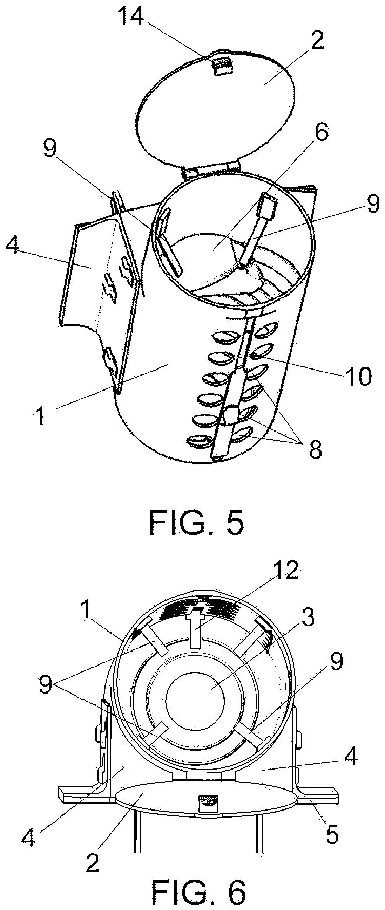

The container or vessel with the beverage is housed inside the cylindrical body (1) and retained therein by means of flexible tabs (9), as shown in Figures 5 and 6.

A guide (10) has been provided, in line with the area where the air outlet orifices (8) are, along which a manually actuated stem (11) moves which is operated inside by a kind of plate (12) that forms a means for supporting the container or vessel with the contents, such that the displacement in an upward or downward direction of said shaft (11) will lift or lower the vessel or container in the cylindrical body (1), such that the lifting operation causes the pushing and corresponding opening of the lid (2), in order to access and hold the beverage container or vessel.

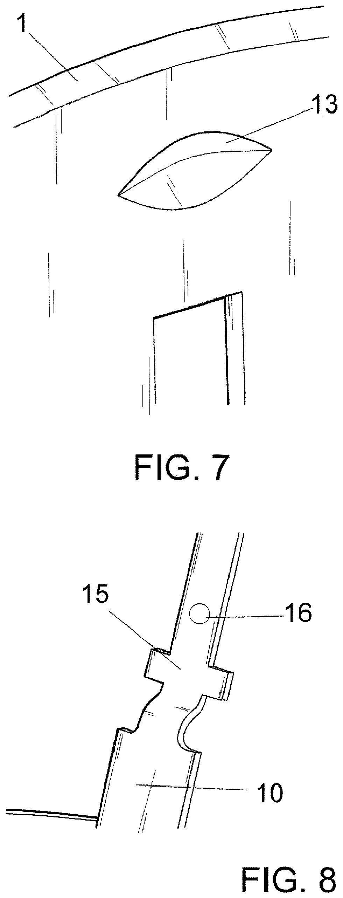

As seen in Figure 7, the inside of the cylindrical body (1) includes a recess (13) in line with its mouth, which is intended for being coupled to its respective lock (14) (see Figure 5) when the lid (2) is in a closed position, whereas, when said lid is the open position and the beverage is fully removable, the guide (10) is intended to be immobilised by coupling a lug (16) to said recess (13) that emerges from an elbow end (15) which is defined in said guide, as shown in Figure 8.

If the lifting/lowering device is damaged or rendered unusable for any reason, or is not operating, then a finger can be inserted through the orifice (3) in the base and the container or vessel with the beverage can be pushed upwards, upon opening the lid (2).

Therefore, when the support assembly is coupled onto the air outlet nozzle of a vehicle dashboard, said air flows into the cylindrical body (1) through the opening (6), exiting through the orifices (8) provided on the opposite side, thereby cooling/heating the beverage in the container or vessel housed inside the cylindrical body (1).

Said air can further be directed by means of small, steerable tabs that can be placed in different ways within the cylindrical body (1).

## Claims

1. Support for cooling/heating beverages in vehicles, intended for use and anchoring in the corresponding air conditioning outlet nozzles of a vehicle, the nozzles being provided for this purpose in the dashboard of the vehicle itself, wherein the support is composed of a preferably cylindrical body (1), externally having a protrusion (4) with a flat outer surface (5) to adapt to the air outlet nozzle of the vehicle, in line with an area of its lateral surface, the air inlet nozzle of the vehicle also having a wide opening (6) to the inside of the cylindrical body (1), and a number of tabs (7) serving as anchoring clips on the air outlet nozzle of the vehicle, with the specific characteristic that air outlet orifices (8) have been provided on the opposite end of the cylindrical body (1), **characterized in that**:
the support comprises a guide along which a pushbutton stem (11) with an inner horizontal plate (12) for lifting the vessel or beverage container contained in the cylindrical body (1) can be slid, by sliding said stem (11) upwards.

2. Support for cooling/heating beverages in vehicles, according to claim 1, **characterised in that** the cylindrical body (1) has a number of flexible tabs (9) on the inside for securing the container or vessel with the beverage.

3. Support for cooling/heating beverages in vehicles according to claim 1, **characterised in that** the guide (10) for lifting the beverage incorporates a lug (16) at its end, that can be selectively coupled to a recess (13) defined in the mouth of the support, intended for receiving a lid (2) seal when the latter is closed.

4. Support for cooling/heating beverages in vehicles, according to claim 1, **characterised in that** the cylindrical body (1) comprises an orifice (3) in its lower base such that the beverage can be pushed upwards, upon opening a lid seal (2).

## Patentansprüche

1. Halterung zum Kühlen/Erwärmen von Getränken in Fahrzeugen, die zur Verwendung und zum Verankern in den entsprechenden Klimaanlagen-Auslassdüsen eines Fahrzeugs bestimmt sind, wobei die Düsen zu diesem Zweck in dem Armaturenbrett des Fahrzeugs selbst bereitgestellt sind, wobei die Halterung aus einem vorzugsweise zylindrischen Körper (1) zusammengesetzt ist, der außen einen Vorsprung (4) mit einer flachen Außenoberfläche (5) zur Anpassung an die Luftauslassdüse des Fahrzeugs in einer Linie mit einem Bereich seiner Seitenoberfläche aufweist, wobei die Lufteinlassdüse des Fahrzeugs auch eine breite Öffnung (6) zur Innenseite des zylindrischen Körpers (1) und eine Anzahl von Laschen (7) aufweist, die als Verankerungsklammern an der Luftauslassdüse des Fahrzeugs dienen, mit der spezifischen Eigenschaft, dass Luftauslassöffnungen (8) am gegenüberliegenden Ende des zylindrischen Körpers (1) bereitgestellt wurden, **dadurch gekennzeichnet, dass**:
die Halterung eine Führung umfasst, entlang welcher ein Druckknopfschaft (11) mit einer inneren horizontalen Platte (12) zum Anheben des Gefäßes oder Getränkebehälters, der in dem zylindrischen Körper (1) enthalten ist, durch Verschieben des Schaftes (11) nach oben verschoben werden kann.

2. Halterung zum Kühlen/Erwärmen von Getränken in Fahrzeugen nach Anspruch 1, **dadurch gekennzeichnet, dass** der zylindrische Körper (1) eine Anzahl flexibler Laschen (9) auf der Innenseite zum Befestigen des Behälters oder Gefäßes mit dem Getränk aufweist.

3. Halterung zum Kühlen/Erwärmen von Getränken in Fahrzeugen nach Anspruch 1, **dadurch gekennzeichnet, dass** die Führung (10) zum Anheben des Getränks einen Ansatz (16) an ihrem Ende aufweist, der selektiv mit einer Aussparung (13) gekoppelt werden kann, die in der Öffnung der Halterung definiert ist und zum Aufnehmen einer Dichtung des Deckels (2) bestimmt ist, wenn dieser geschlossen ist.

4. Halterung zum Kühlen/Erwärmen von Getränken in Fahrzeugen nach Anspruch 1, **dadurch gekennzeichnet, dass** der zylindrische Körper (1) eine Öffnung (3) in seiner unteren Basis umfasst, sodass das Getränk beim Öffnen einer Deckeldichtung (2) nach oben gedrückt werden kann.

## Revendications

1. Support pour les liquides de refroidissement/chauffage dans les véhicules, prévu pour son utilisation et son ancrage dans les buses de sortie de la climatisation correspondantes d'un véhicule, les buses étant prévues dans ce but dans le tableau de bord du propre véhicule, dans lequel le support est composé d'un corps de préférence cylindrique (1), ayant à l'extérieur une saillie (4) avec une surface externe plate (5) pour s'adapter à la buse de sortie d'air du véhicule, alignée avec une zone de sa surface latérale, la buse d'entrée d'air du véhicule ayant également une ouverture large (6) jusqu'à l'intérieur du corps cylindrique (1), et un nombre de languettes (7) servant de pattes d'ancrage sur la buse de sortie d'air du véhicule, avec les caractéristiques spécifiques dont les orifices de sortie d'air (8) ont été pourvues à l'extrémité opposée du corps cylindrique (1), **caractérisé en ce que** :
le support comprend un guide le long duquel un bouton poussoir à tige (11) avec une plaque horizontale interne (12) pour remonter le récipient ou conteneur de liquide contenu dans le corps cylindrique (1) peut être glissé, en faisant glisser ladite tige (11) vers le haut.

2. Support pour les liquides de refroidissement/chauffage dans les véhicules, selon la revendication 1, **caractérisé en ce que** le corps cylindrique (1) a un nombre de languettes flexibles (9) à l'intérieur pour verrouiller le conteneur ou récipient avec le liquide.

3. Support pour les liquides de refroidissement/chauffage dans les véhicules selon la revendication 1, **caractérisé en ce que** le guide (10) pour remonter le liquide incorpore un tenon (16) à son extrémité, qui peut être couplé sélectivement à un renfoncement (13) défini dans la bouche du support, prévu pour recevoir un joint de couvercle (2) lorsque ce dernier est fermé.

4. Support pour les liquides de refroidissement/chauffage dans les véhicules, selon la revendication 1, **caractérisé en ce que** le corps cylindrique (1) comprend un orifice (3) sur sa base inférieure de sorte que le liquide puisse être poussé vers le haut, après l'ouverture d'un joint de couvercle (2).
